# EUROPEAN PATENT SPECIFICATION

(11) **EP 1 518 596 B1**
(45) Date of publication and mention of the grant of the patent: **28.11.2012**
(21) Application number: 02796285.1
(22) Date of filing: 28.08.2002
(51) Int. Cl.: B01D 29/64, B01D 29/68

(54) **MESH FILTER SYSTEM WITH CLEANING NOZZLE**
DRAHTGITTERFILTERSYSTEM MIT REINIGUNGSDÜSEN
SYSTÈME DE FILTRATION A MAILLES AVEC BUSE DE NETTOYAGE

(30) Priority: 28.08.2001 ES 200101969
(43) Date of publication of application: 30.03.2005
(73) Proprietor: V.C Patrimonial S.L., 22400 Monzón Huesca (ES)
(72) Inventor: Lozano Fernandez, Christobal, 28004 Madrid (ES); Viguria Padilla, Antidio, 28004 Madrid (ES); Ortega Delgado, Juan Manuel, 28004 Madrid (ES); Fernandez Castillo, José, 28004 Madrid (ES); Quevado Diaz, Salvador, 28004 Madrid (ES); Martagon Blanco, Manuel, 28004 Madrid (ES)
(74) Representative: Schäfer, Matthias W.
(86) International application number: PCT/ES2002/000412
(87) International publication number: WO 2003/018171

(56) References cited:
- CH-A- 675 546
- DE-C- 3 929 561
- ES-T3- 2 053 157
- ES-T3- 2 054 323
- ES-U- 1 001 698
- ES-U- 1 041 596
- GB-A- 2 031 295
- US-A- 4 239 409
- US-A- 4 867 870
- US-A- 5 183 568
- US-A- 6 048 583

## Description

### PURPOSE OF THE INVENTION

The invention herein proposed refers to a mesh filter system according to the preamble of claim 1, that are internally incorporated in pressure filtration meshes of contaminated water, especially in the agricultural, industrial and municipal services sectors.

This invention is characterized by a special construction of the nozzle, fitted with a ring-shaped brush placed around the perimeter of its mouth, that, by its rubbing when the cleaning sump rotates, assists in the cleaning of the mesh. Similarly, when the cleaning process is triggered, the water filtered through the meshes and the nozzles passes at high speed to the atmosphere; thereby dragging away the particles stuck to them.

### BACKGROUND TO THE INVENTION

Water pressure filters, using absorbent meshes and nozzles, especially for agricultural uses, are very well-known and used since a long time ago.

"New self-cleaning filter", ES-U-1001698, is an invention of these same applicants: consisting of a cylindrical tubular casing, with end covers and three consecutive internal chambers, one of the ends connected to one of the pipes supplying contaminated water, and the other, central and outgoing, of the water cleaned of these contaminants; this in turn fitted with a fine filtration mesh, internally in a perforated cartridge similar to that placed in the first chamber, although in the opposite direction of flow.

This second meshed cartridge of the central chamber houses in its interior an axial collector pipe, which is what holds the contaminant absorption nozzles as well as being connected to the other external chamber; while the filtered water goes through the other connection of the filter.

A similar device as in ES - U-1001698 is disclosed in ES - U -1041596.

Further, document CH - A5 - 675546 and ES - T3 - 2053157 both disclose a cylindrical filter screen being housed in a housing. The inner wall of the housing is provided in axial direction with a longitudinal brush extending over the whole length of the screen and extending in radial direction from the inner wall to the outer surface of the screen. During normal use, the brushes of these disclosures are not cleaning the screen. The cleaning is rather executed manually from time to time by rotating the screen with a hand wheel.

The end part of this contaminant collector, passing to the other end chamber and finishing in a traverse tube, fitted with two end mouths; the collector acting as a hydraulic motor at a speed arising from the pressure of the water supply network.

The applicant is unaware of the existence of cleaning nozzles with the characteristics of those now presented herein.

### DESCRIPTION OF THE INVENTION

The invention, subject of this report, relates to a mesh filter system according to claim 1, especially in the agricultural, industrial and municipal services sectors, from among all those nozzles internally mounted in filtration meshes and incorporated in perforated pipes, which are rotary and connected to an discharge collector. Advantageous embodiments a described in the dependent claims.

The clean water, at network pressure, enters through the cleaning nozzle through its intake opening at high speed, from outside the cartridge fitted with the mesh; the stripping or dragging of the particles stuck to the mesh being produced at that time.

This invention is characterized by a special construction of the nozzle, fitted with a ring-shaped brush placed around the perimeter of its mouth, made up of a large number of equal-length fibres, that are arranged in contact with the mesh and that assist in the actual filtration as well as in the cleaning of the mesh.

### DESCRIPTION OF THE DRAWINGS

This descriptive report is supplemented by a set of drawings, illustrative and never limitative, of the preferred example of the invention.

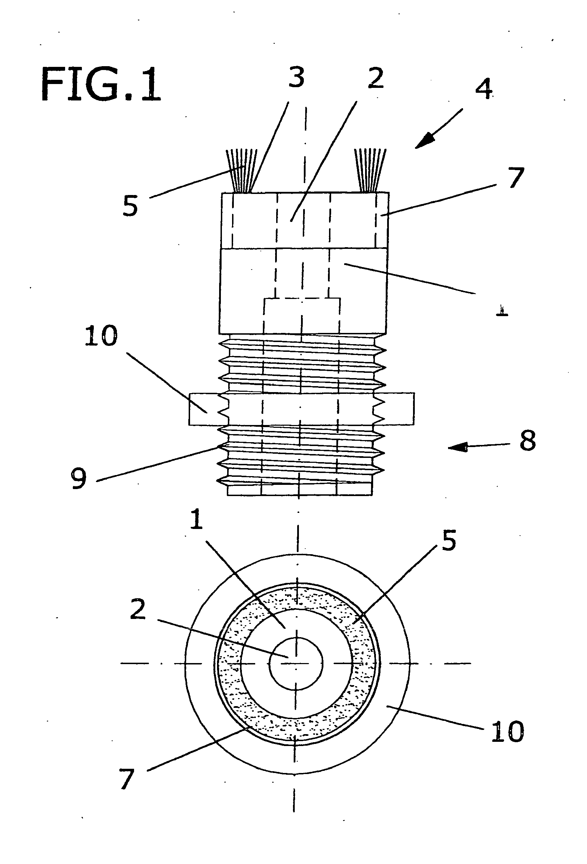

Figure 1 shows a section and a front view of the nozzle of the invention.

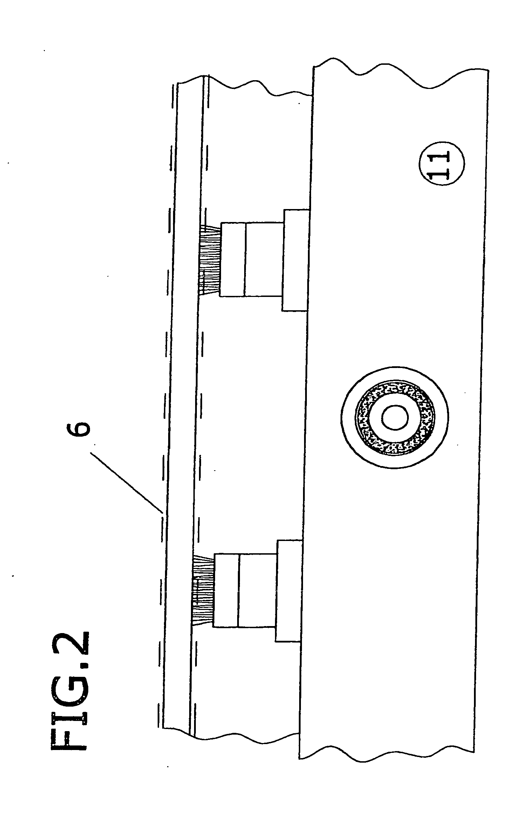

Figure 2 shows a section of the central area of a filter, with the layout of an alignment of nozzles in the sump; it also shows part of the mesh, mounted on the water discharge perforated pipe.

### PREFERRED EMBODIMENT OF THE INVENTION

In view of what has been previously set out, this invention relates to a mesh filter cleaning nozzle, especially in the agricultural, industrial and municipal services sectors; from among all those nozzles internally placed in filtration meshes and incorporated in perforated pipes, being rotary and connected to an discharge collector: characterized by hermetically sealing the mesh area on which it rests, incorporating on top a perimeter ring-shaped brush (4), of plastic material in a ring-shaped thickening (1) of its mouth (2), and placed in an internal stepping (3) next to its edges. The brush is externally secured by a metallic casing (7), of aluminium or similar, and is made up of a large number of equal-length fibres (5), that are positioned in contact with the mesh (6), and that assist both in the actual filtration and in the cleaning by brushing of the mesh (6); while the nozzle is made up of circular section tubing, of plastic material, preferably PVC, with its insertion end (8) threaded (9) and fitted with a nut (10) for attachment to the discharge collector (11)

The circular section tubular nozzle can be substituted by another of square, rectangular or other section and the plastic material can be substituted by a metallic one.

The insertion end (8), threaded (9) and fitted with a nut (10) for attachment to the discharge collector (11) can be substituted, in turn, by a flat end, welded to the collector (11); by the most appropriate procedure for the material chosen for the nozzle.

Similarly, the internal stepping (3) can be substituted by a central slotting in this base of the nozzle, for upper insertion of the ring-shaped brush (4), which may or may not have the metallic casing (7). In turn, the ring-shaped brush (4) can be make up in a single piece that includes the large number of fibres (5)

Variations in materials, shapes, size and layout of the component parts, described in non-limiting way, do not alter the essential nature of this invention, this being sufficient for its reproduction to be undertaken by an expert.

## Claims

1. Mesh filter system including a cleaning nozzle, a rotating discharge collector (11) and a cylindrical pressure filtration mesh (6) incorporated in a perforated pipe, wherein the cleaning nozzle is connected to the rotating discharge collector (11) placed inside the cylindrical pressure filtration mesh (6), **characterized in that** the nozzle is sealing the mesh area on which it rests by incorporating on top a perimeter ring-shaped brush (4) of plastic material accommodated in a ring-shaped thickening (1) of the nozzle's mouth (2), the brush being made from a large number of fibres (5) of equal length, that are positioned in contact with the mesh (6) assisting both in the actual filtration and in the cleaning by brushing of the mesh (6), while the nozzle is made of tubing with its end (8) being attached to the discharge collector (11).

2. Mesh filter cleaning system according to claim 1, **characterised in that** the tubular nozzle has a circular cross section.

3. Mesh filter cleaning system according to claim 1, **characterised in that** the tubular nozzle has a square or rectangular cross section.

4. Mesh filter cleaning system according to the previous claims; **characterized in that** the end (8) is threaded (9) and fitted with a nut (10) for attachment to the discharge collector (11).

5. Mesh filter cleaning system according to claims 1 - 3, **characterized in that** the end is welded to the collector (11), using the most appropriate procedure for the material chosen for the nozzle.

6. Mesh filter cleaning system according to the previous claims, **characterized in that** the ring-shaped brush (4) is made of a single piece that includes the large number of fibres (5).

7. Mesh filter cleaning system according to the previous claims, **characterized in that** the perimeter ring-shaped brush (4) is placed in an internal stepping (3) next to the nozzle's edges which is externally secured by a metallic casing (7).

8. Mesh filter cleaning system according to claims 1-6, **characterized in that** the perimeter ring-shaped brush (4) is placed in a central slotting in the base of the nozzle.

## Patentansprüche

1. Siebfiltersystem beinhaltend eine Säuberungsdüse, einen rotierenden Ausflusskollektor (11) und ein zylindrisches Druckfiltrationssieb (6), integriert in eine perforierte Röhre, wobei die Säuberungsdüse mit dem rotierenden Ausflusskollektor (11) verbunden ist, der sich in dem zylindrischen Druckfiltrationssieb (6) befindet,
**dadurch gekennzeichnet,dass** die Düse die Siebfläche, auf der sie ruht, mit einer am oberen Düsenende befindlichen, perimeter-ringförmigen Bürste (4) aus Kunststoff abdichtet, die an einer ringförmigen Verdickung (1) an der Düsenmündung (2) angebracht ist,
wobei die Bürste aus einer großen Anzahl von Fasern (5) gleicher Länge hergestellt ist, die so positioniert sind, dass sie in Kontakt mit dem Sieb (6) sind, und die Filtration und die Säuberung durch Bürsten des Sieb (6) unterstützen,
während die Düse aus einem Rohr besteht, dessen Ende (8) an dem Ausflusskollektor (11) befestigt ist.

2. Siebfiltersystem nach Anspruch 1, **dadurch gekennzeichnet, dass** die röhrenförmige Säuberungsdüse einen kreisrunden Querschnitt aufweist.

3. Siebfiltersystem nach Anspruch 1, **dadurch gekennzeichnet, dass** die röhrenförmige Säuberungsdüse einen quadratischen oder rechteckigen Querschnitt aufweist.

4. Siebfiltersystem nach einem oder mehreren der vorhergehenden Ansprüche, **dadurch gekennzeichnet, dass** das Düsenende (8) mit einem Gewinde (9) und einer Mutter (10) zur Verbindung mit dem Ausflusskollektor (11) versehen ist.

5. Siebfiltersystem nach Ansprüchen 1-3, **dadurch gekennzeichnet, dass** das Düsenende (8) an den Ausflusskollektor (11) unter Verwendung eines für das Material der Säuberungsdüse geeigneten Verfahrens angeschweißt ist.

6. Siebfiltersystem nach einem oder mehreren der vorhergehenden Ansprüche, **dadurch gekennzeichnet, dass** die ringförmige Bürste (4) aus einem einzigen Stück besteht, das eine Vielzahl von Fasern (5) beinhaltet.

7. Siebfiltersystem nach einem oder mehreren der vorhergehenden Ansprüche, **dadurch gekennzeichnet, dass** die ringförmige Bürste (4) in einer inneren Abstufung (3) am Düsenrand angeordnetist und von außen durch eine metallische Einfassung (7) gesichert ist.

8. Siebfiltersystem nach einem oder mehreren der Ansprüche 1-6, **dadurch gekennzeichnet, dass** die perimeter-ringförmige Bürste (4) in einer zentralen Vertiefung in der Basis der Düse angeordnet ist.

## Revendications

1. Système de filtration à mailles comprenant une buse de nettoyage, un collecteur d'évacuation tournant (11) et un filtre cylindrique à mailles pour filtration sous pression (6) incorporé dans un tuyau perforé, où la buse de nettoyage est connectée au collecteur d'évacuation tournant (11) placé à l'intérieur du filtre cylindrique à mailles (6) **caractérisé en ce que** la buse scelle la zone de mailles sur laquelle elle repose en constituant au-dessus de celle-ci un périmètre fait d'une brosse en forme d'anneau (4) de matière plastique placé dans un épaississement annulaire (1) de l'embouchure (2) de la buse, la brosse se composant d'un grand nombre de fibres (5) de longueur égale qui sont placées en contact avec les mailles (6) aidant à la fois la filtration actuelle et le nettoyage des mailles (6) par brossage, où la buse est faite d'un tube dont l'extrémité (8) est attachée au collecteur d'évacuation (11).

2. Système de filtration à mailles autonettoyant selon la revendication 1 **caractérisé en ce que** la buse tubulaire a une section circulaire.

3. Système de filtration à mailles autonettoyant selon la revendication 1 **caractérisé en ce que** la buse tubulaire a une section carrée ou rectangulaire.

4. Système de filtration à mailles autonettoyant selon les revendications précédentes **caractérisé en ce que** l'extrémité (8) est filetée (9) et équipée d'un écrou (10) pour l'attachement au collecteur d'évacuation (11).

5. Système de filtration à mailles autonettoyant selon les revendications 1 - 3 **caractérisé en ce que** l'extrémité est soudée au collecteur d'évacuation (11) en utilisant la procédure la plus adéquate pour le matériau choisi pour la buse.

6. Système de filtration à mailles autonettoyant selon les revendications précédentes **caractérisé en ce que** la brosse annulaire (4) est faite d'une seule pièce comprenant le large nombre de fibres (5).

7. Système de filtration à mailles autonettoyant selon les revendications précédentes **caractérisé en ce que** le périmètre formé par la brosse annulaire (4) est placé dans un rebord interne (3) à proximité des bords de la buse qui est sécurisé à l'extérieur par un boîtier métallique (7).

8. Système de filtration à mailles autonettoyant selon les revendications 1 - 3 **caractérisé en ce que** le périmètre formé par la brosse annulaire (4) est placé dans un rainurage central de la base de la buse.
